# EUROPEAN PATENT SPECIFICATION

(11) **EP 1 752 398 B1**
(45) Date of publication and mention of the grant of the patent: **03.12.2008**
(21) Application number: 06118278.8
(22) Date of filing: 01.08.2006
(51) Int. Cl.: B65G 49/08, F27D 3/00

(54) **Apparatus for loading/unloading ceramic products to/from roller storage boxes**
Vorrichtung zur Be- und Entladung von keramischen Gegenständen von Rollenpaletten
Dispositif pour le chargement et le déchargement de produits céramiques de palettes à rouleaux

(30) Priority: 08.08.2005 IT BO20050527
(43) Date of publication of application: 14.02.2007
(73) Proprietor: SIMA S.r.l., 41043 Modena (IT)
(72) Inventor: Bardi, Maurizio, 41043 Modena (IT)
(74) Representative: Dall'Olio, Giancarlo

(56) References cited:
- EP-A1- 0 999 158
- EP-A1- 1 203 737

## Description

The present invention relates to apparatuses for loading/unloading of ceramic products, in particular tiles, to/from roller storage boxes.

Work units have been known and used in the ceramic field for long time for automatically handling tiles. These work units are designed for collecting the tiles or withdrawing them from suitable containers used for storing and transporting the tiles among various work stations.

According to known methods, the containers, so-called boxes, include a bottom, with two vertical sides, which support a plurality of parallel idle rollers, defining a series of tracks for receiving the tiles thereon.

The operation of the rollers, commanded by the work units, to rotate, allows to withdraw/introduce tiles from/onto the tracks of each box in an automatic way.

Known work units include a portal framework with uprights, along which a pair of carriages are operated preferably independently from one another, to move vertically along suitable guides.

The carriage turned toward the boxes has usually one or two cantilevered arms, equipped with known means for powering the rollers of the tracks of the boxes, while the carriage turned to the opposite side, supports a powered roller conveyor, which connects the work unit to known means for conveying the tiles, e.g. a belt conveyor.

Known work units, so-defined as "complex", are provided with a powered roller track, which can translate both horizontally and vertically, so as to act on a pair of boxes in rapid sequence.

Document EP 1.203.737 discloses an apparatus of this kind, which comprises: a fixed roller plane, supplied by a conveyor line for formation of layers of tiles, which fixed roller plane is associated to the conveyor line so that rows of tiles formed on the conveyor line can be translate onto the fixed roller plane in a perpendicular direction to the rows formed on the conveyor line; a mobile roller plane for transferring layers of tiles from the fixed roller plane to single roller planes of the stillages and vice versa, the mobile roller plane being coupable with the fixed roller plane in a position which is facing an external side of the fixed roller plane; the rollers of the fixed roller plane being perpendicular to the direction along which the rows of tiles formed on the conveyor line are translated and accumulated on the fixed roller plane; means being provided for enabling controlled translation of the tiles accumulated on the fixed roller plane onto the mobile roller plane in a perpendicular direction to the direction along which the rows of the tiles are accumulated on the conveyor line; the mobile rollers plane being positionable in a vertical plane arranged parallel or perpendicular to the external side of the fixed roller plane in order to be coupled to roller planes of at least two stillages located in at least two loading or unloading stations situated side-by-side.

Conceived to cope with the case of extremely complicated machine, this structure allows also to increase considerably the system production rate, reducing at the same time the number of inlet faces of the work units, so as to allow the production lines to be set closer to each other and to save space.

The main disadvantages of the work units called "complex" result basically from the high handling and maintenance costs, as well as from the difficult adjustment and leveling with respect to the two box inlet faces.

It is to be pointed out that in this case, placing and/or withdrawing of the tiles onto and from the boxes is extremely difficult, because it occurs always in a work area, which is in close proximity to operation means.

This results in an undeniable danger during the placing and/or withdrawing, with high risk of collision either with the cantilevered arms, for powering the box rollers, or sometimes also with the powered roller track.

The object of the present invention is to propose an apparatus for loading/unloading ceramic products and similar to/from roller storage boxes, which allows a reduction of the system installation, handling and maintenance costs, reducing at the same time, the working areas potentially dangerous for the operators and for the carriages aimed at placing and/or withdrawing the tiles onto and from the storage boxes.

Another object of the present invention is to propose an apparatus for loading/unloading ceramic products, which allows reduced dimensions and a very good production rate of the system, also reducing collision probability during placing and/or withdrawing the tiles onto and from the storage boxes.

A further object of the present invention is to propose a particularly reliable and versatile apparatus, which allows a high system flexibility.

A still further object of the present invention is to propose a handling system of the apparatus, whose dimensions are particularly limited and which facilitates the installation and/or maintenance operation, while allowing constant and correct alignment of the work units supporting the ceramic tiles during the loading/unloading to/from the storage box.

The above mentioned objects are obtained in accordance with the contents of the claims.

The characteristic features of the invention will be pointed out in the following description of some preferred, but not exclusive embodiments, with reference to the enclosed tables of drawings, in which:
- Figures from 1 to 14 are corresponding top views of the proposed apparatus in as many embodiments;
- Figure 15 is a perspective, schematic view of a preferred, but not exclusive handling system of the proposed apparatus;
- Figure 16 is a perspective, enlarged view of a particular A, indicated in Figure 15;
- Figures 17, 18 are as many views, front and top, of another handling system of the proposed apparatus.

Having regard to the above Figures, the reference numeral 1 indicates the proposed apparatus for loading/unloading of ceramic products, in particular tiles, to/from known roller storage boxes.

The apparatus includes a loading/unloading station 2, which can act on at least a pair of roller boxes 3, 4 and which has one or more arms 5, moving vertically with respect to a guiding frame 6, 60, 600 and having means for alternate powering of the roller heads of each track of the pair of boxes 3, 4.

Pairs of arms 5, indicated in the Figures as a pure example, act on the tracks of each box 3, 4 and move vertically with respect to a guide frame of the type including a single portal 6, 60, so as to straddle above each one of the boxes 3, 4, or of the type including a double portal 600, so as to straddle above both boxes 3, 4.

The proposed apparatus includes also a pair of tray elevators 30, 40, moving vertically and preferably in an independently from each other, for spatial connection between the roller tracks of the corresponding facing box 3, 4 and at least a first roller conveyor 7, situated at ground level and aimed at exchanging tiles with a conveying line 8.

Means 31, 32, 41, 42 are connected to each tray elevator 30, 40, for controlled exchange of tiles between the relevant facing box 3, 4 and the first ground roller conveyor 7.

The arms 5 acting on the tracks of each of the boxes 3, 4 can be operated vertically independently from or together with the pair of tray elevators 30, 40 moving vertically, in accordance with the specific requirements.

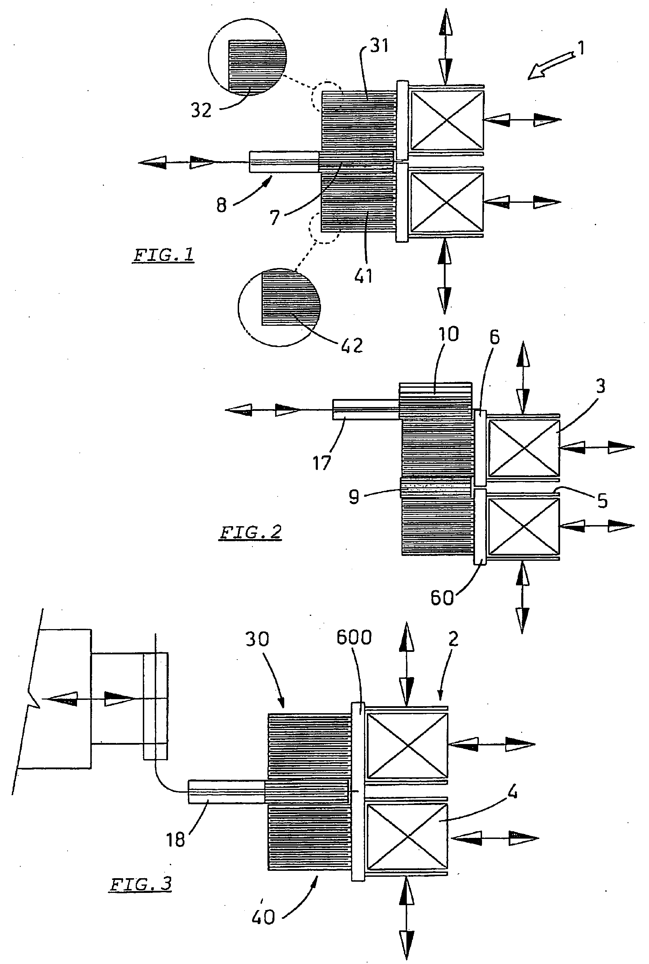

According to a preferred embodiment, the first ground roller conveyor 7 is interposed between the tray elevators 30, 40, so as to transfer tiles between both of them (Figures 1, 3, 5).

According to another embodiment, the first ground roller conveyor 7 is situated beside one tray elevator 30, 40, so as directly transfer ceramic products from and to the latter.

In this case, a connection roller conveyor 9 must necessarily be interposed between the pair of tray elevators 30, 40, e.g. situated at the ground level (Figures 2, 4, 6, 7, 8).

With particular reference to the embodiments shown in Figures from 1 to 8, the means for controlled exchange of tiles between the relevant facing box 3, 4 and the first ground roller conveyor 7 includes, for each tray elevator 30, 40, a roller conveyor 31, 41 having parallel powered rollers, which cooperate with a plurality of conveying belts 32, 42. The conveying belts are interposed between the parallel rollers and that can be operated from a lower, rest position to an upper, active position, in which they define a support and transport surface for the ceramic products, situated at higher level with respect to the track defined by the powered rollers.

As a pure example, the rollers of the roller conveyors 31, 41, connected to the tray elevators 30, 40, and the rollers of the first ground roller conveyor 7 are parallel and oriented orthogonal with respect to the rollers of the pair of boxes 3, 4, situated in the loading/unloading station 2.

Obviously, this does not exclude a different arrangement.

In this case, the interchange of tiles between the boxes 3, 4 and the tray elevators 30, 40 is anyway allowed by the connected conveying belts 32, 42.

Advantageously, the rollers of the roller conveyors 31, 41, connected to the tray elevators 30, 40 and the rollers of the connection roller conveyor 9 are parallel.

According to the production specific requirements, the proposed apparatus 1 can include compensating means 10, which cooperate with the first ground roller conveyor 7 and which can collect and/or release tiles during the interchange with the conveying line 8 and the first roller conveyor 7, as e.g. shown in Figure 2.

The compensating means 10 can include vertical storage devices or roller conveyors.

In Figures 1 and 2, the first ground roller conveyor 7 is interposed between the moving roller conveyors 31, 41 and beside one of them, 31, with the conveying line 8 including a rectilinear belt conveyor 17, which forms longitudinal rows of tiles on the first ground roller conveyor 7.

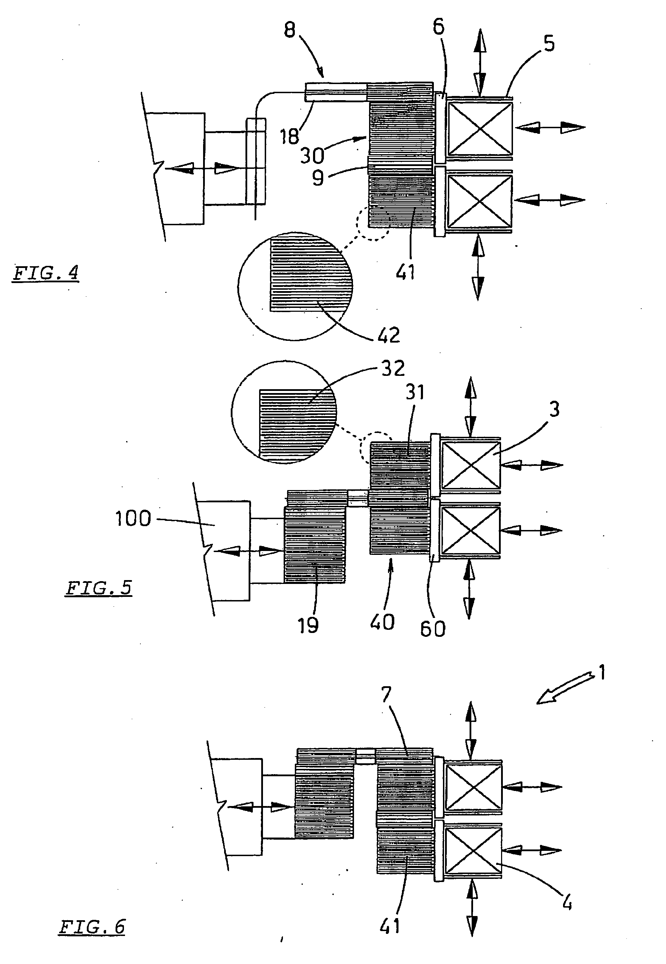

Figures 3 and 4 show a conveying line 8, which includes a stove 100, interchanging tiles with an angular belt conveyor 18.

The angular belt conveyor 18 cooperates with the first ground roller conveyor 7, either interposed between the moving roller conveyors 31, 41 or beside them.

Figures 5 and 6 show a conveying line 8, which includes a stove 100, interchanging tiles with a cross-conveyor 19, situated on the ground and cooperating with the first ground roller conveyor 7, either interposed between the moving roller conveyors 31, 41 or beside them.

The cross-conveyor 19 includes a roller conveyor with parallel, powered rollers, cooperating with a plurality of conveying belts, interposed between said parallel rollers and operated from a lower, rest position to an upper, active position.

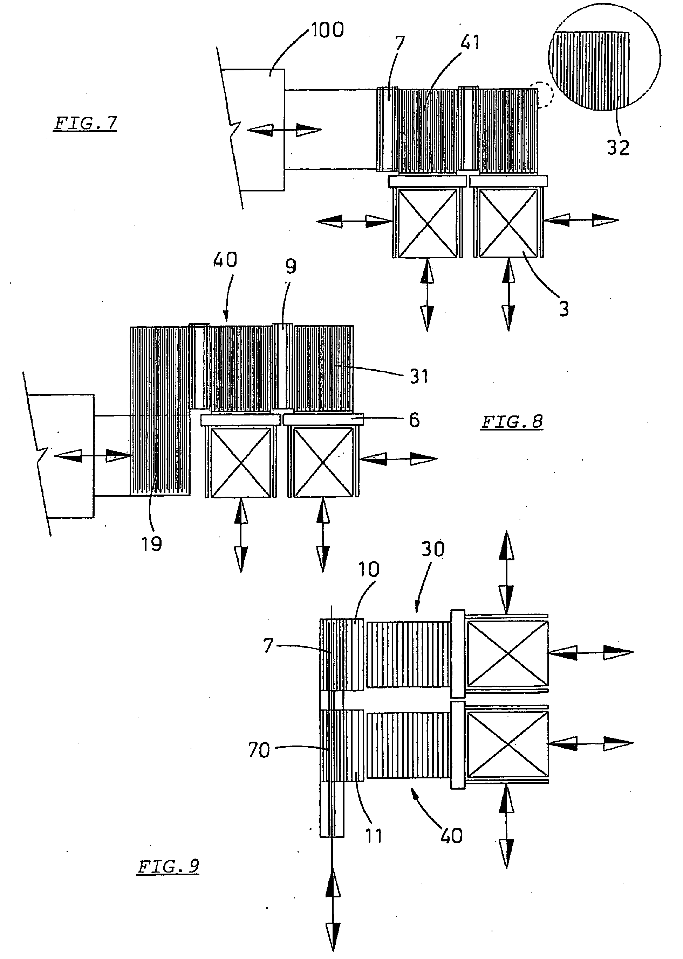

In the Figures from 3 to 6, the axis of the stove 100 is orthogonal to the rollers of the various box 3, 4 tracks, while in Figures 7 and 8, the axis of the stove 100 is parallel to the rollers of the various box 3, 4 tracks, respectively not aligned and aligned with the rollers.

In Figures from 1 to 8, the roller boxes 3, 4 are shown, as example, arranged one beside another, and consequently, during the release/withdrawal step, each of them allows the tray elevators to reach it frontally, and only at one lateral side, i.e. the one opposite to the adjacent sides.

According to another embodiment, the proposed apparatus 1 includes a pair of ground roller conveyors, first 7 and second 70, connected to the related pair of tray elevators 30, 40.

Each of the ground roller conveyors 7 allows the tile interchange between the conveying line 8 and the corresponding tray elevator 30, 40.

With a particular reference to the embodiment shown in Figures from 9 to 14, the means for controlled tile interchange between the relative facing box 3, 4 and the corresponding ground roller conveyor 7, 70 include, for each tray elevator 30, 40, a roller conveyor 31, 41 with parallel motorized rollers.

For example, the rollers of the roller conveyors 31, 41, connected to each tray elevator 30, 40 and the corresponding rollers of the ground roller conveyor 7, 70 and of the facing box 3, 4, are parallel, so as to obtain tile interchange therebetween along straight paths.

Analogously to what has been said previously, the apparatus 1 can include compensating means 10, 11, which cooperate with one or both ground roller conveyors 7, 70 and which can collect and/or release tiles during the interchange with the conveying line 8 and the corresponding ground roller conveyor 7, 70.

The compensating means 10,11 can include vertical storage devices or roller conveyors with parallel rollers, suitably motorized.

In Figures 9, 10 and 11, two ground roller conveyors 7, 70 interchange tiles with a straight belt conveyor 17, which cooperates, in the second and the third case, with a stove 100, respectively directly and by interposition of a cross-conveyor 19, situated on the ground.

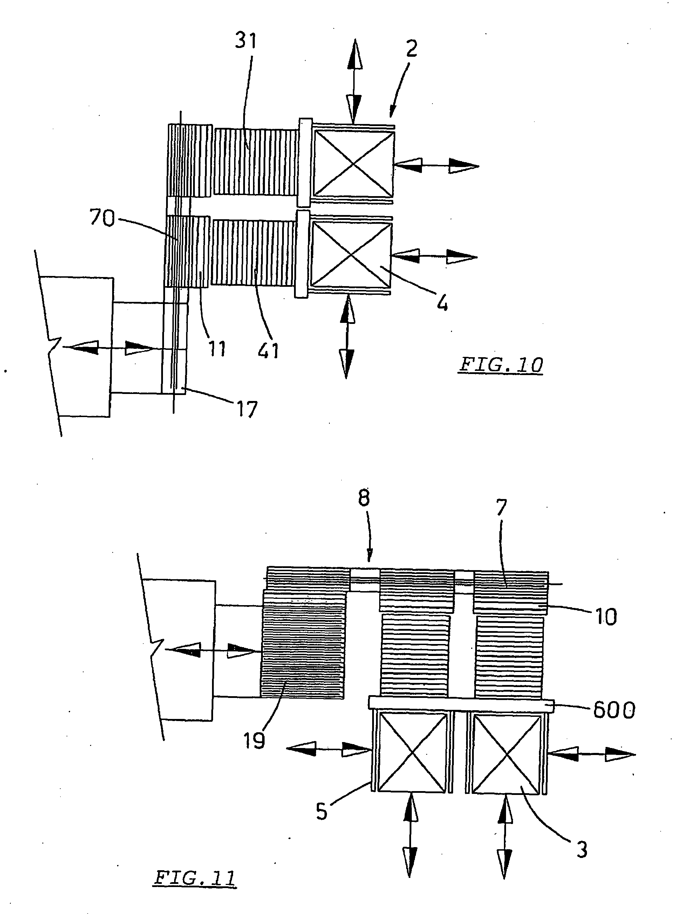

This allows to orient the stove axis orthogonal (Figure 10) and parallel (Figure 11), to the rollers of the boxes 3, 4.

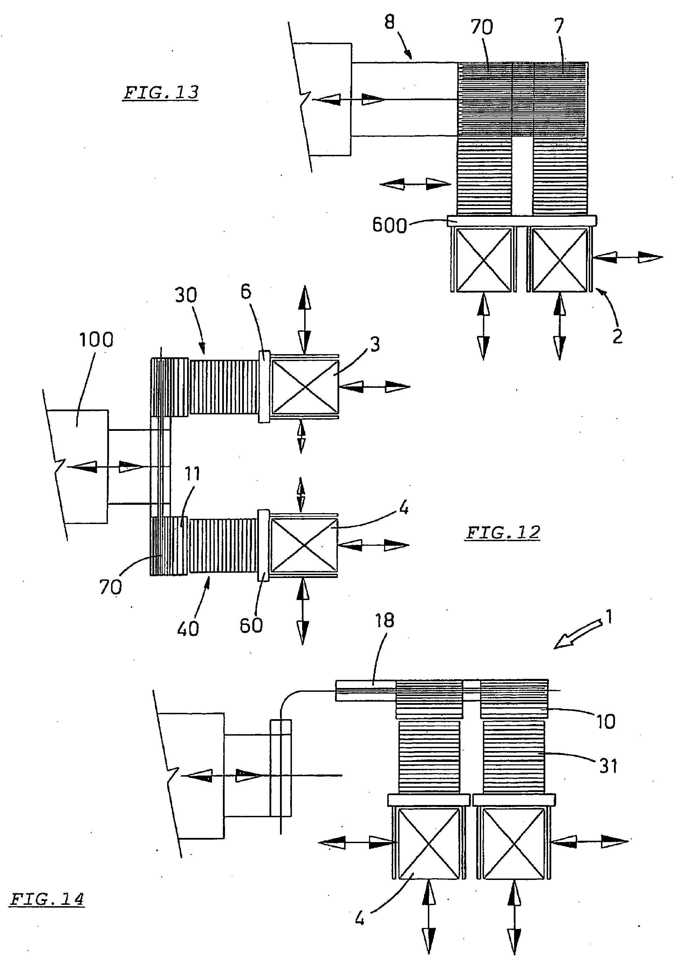

In Figure 12, the roller boxes 3, 4 are spaced apart, so as to allow full lateral access, and the stove 100, interposed between the boxes 3, 4, with the axis orthogonal to the relative rollers, feeds centrally a straight belt conveyor 17, which cooperates, at each end, with the relative ground roller conveyor 7, 70.

In Figure 13, the conveying line 8 allows the stove 100 to interchange transversal rows of tiles with the ground roller conveyors 7, 70, forming on the latter layers of tiles to be conveyed on the moving roller conveyors 31, 41.

In Figure 14, the conveying line 8 includes an angular belt conveyor 18, cooperating with a stove 100, having the axis parallel to the rollers of the boxes 3, 4.

According to the above described embodiments, shown in Figures from 1 to 14, it is possible to load/unload the pair of boxes 3, 4 in different ways, in relation to the production specific requirements.

In particular, it is possible to complete the loading/unloading cycle of one box 3, 4 at a time, or in a mixed way, using alternate cycles of loading/unloading of each box 3, 4.

With reference to the embodiment of Figure 1, it is possible e.g. to load completely the first moving roller conveyor 31, while resting at ground level, and, during its unloading onto the relevant box 3, while dwelling at the relevant height, to partially load the second moving roller conveyor 41 located at ground, so that it is possible to load the first moving roller conveyor 31, when it returns, in a suitable way, both by the conveying line 8 and by a partial load accumulated on the second moving roller conveyor 41.

With reference to the embodiment of Figure 2, during unloading of the first moving roller conveyor 31 at the relevant height, the tiles are collected, at ground level, in the compensating means 10, connected to the first fixed roller conveyor 7, while during unloading of the second moving roller conveyor 41, situated at the relevant height, the tiles can be collected either in the compensating means 10 or on the first moving roller conveyor 31, at the ground level.

The operation way of the embodiments shown in Figures from 3 to 14 are substantially similar and in any case easy to understand for those skilled in the field.

Figures from 15 to 18 show two driving systems 100, 101 of the proposed apparatus 1, e.g. indicated for the guide frame 600 with a single portal, alternative to the independent driving of the tray elevators 30, 40.

In particular, the tray elevators 30, 40, shown in these Figures in an extremely schematic way, are interconnected by a driving system 100, 101, which makes the driving action of one correspond to a relative counter-balance action of the other.

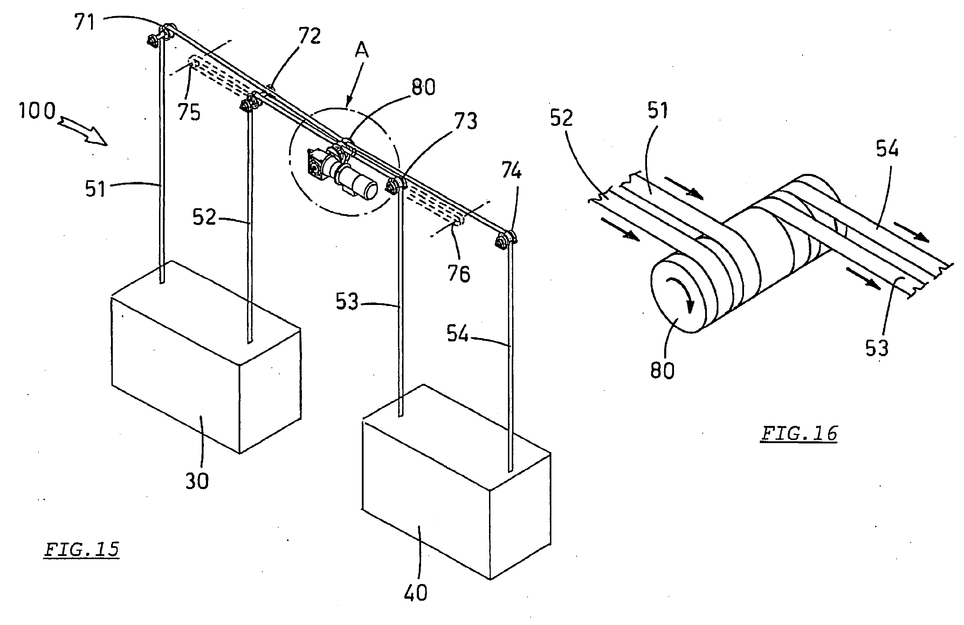

According to a first embodiment, shown in Figures 15 and 16, the first handling system 100 includes two pairs of link elements, a first pair 51, 52, and a second pair 53, 54, which turn round corresponding driven wheels 71,72, 73, 74, 75, 76 and are wound onto at least one driving wheel 80, advantageously interposed between the tray elevators 30, 40.

One end of the link elements 51, 52 of the first pair is connected to the first tray elevator 30, and the other end to the driving wheel 80, likewise, one end of the link elements 53, 54 of the second pair is connected to the second tray elevator 40, and the other end to the driving wheel 80 (Figure 15).

For example, the link elements 51, 52, 53, 54 include bands of synthetic material, or possibly ropes, which turn round driven wheels 71, 72, 73, 74, 75, 76 and are wound onto a driving wheel 80, substantially aligned and parallel to the ground.

It can be seen in Figure 15 that the bands 51, 52, connected to the first tray elevator 30, wind round the pair of driven wheels 71, 72 of a different extension, likewise, the bands 53, 54, connected to the second tray elevator 40 wind round the pair of driven wheels 73, 74.

The same Figure 15 shows, indicated with broken line, a further pair of driven wheels, interposed between the previous ones 71, 72, 73, 74, round which the relative bands 52, 53 wind.

Consequently, the bands 52, 53 have the same extension as the corresponding bands 51, 54, connected to the same tray elevator 30, 40.

The lifting/lowering of the first tray elevator 30 by the first pair of open link elements 51, 52, which are connected to the driving wheel 80, causes the lowering/lifting of the second tray elevator 40, which is also connected to the same driving wheel 80, by the second pair of the open link elements 53, 54.

As it is clearly seen in Figure 16, the link elements 51, 52, 53, 54 turn round the driving wheel 80, so that the driving action of the first tray elevator 30 corresponds to the counter-balance action of the second tray elevator, and vice-versa.

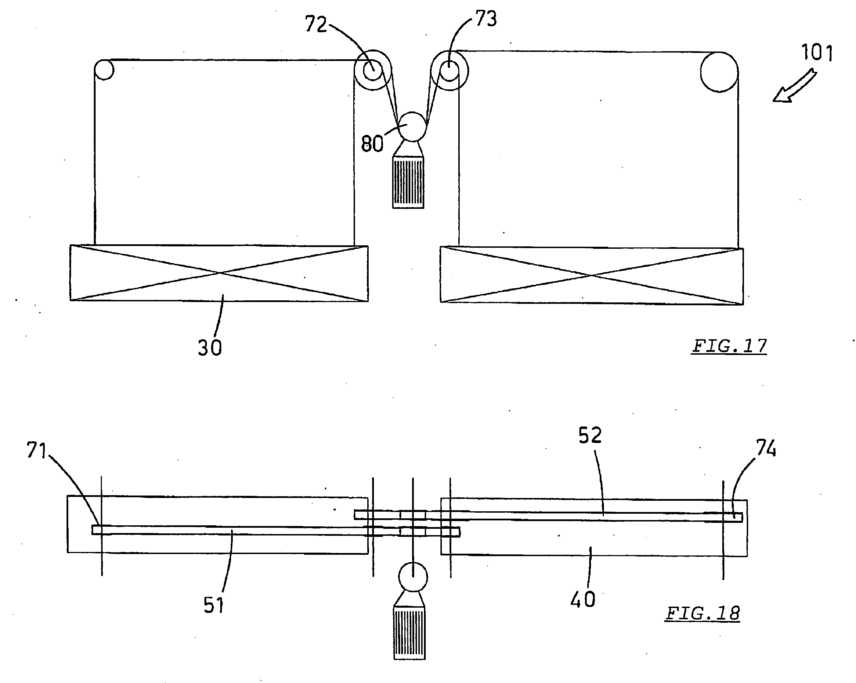

According to a further embodiment, shown in Figures 17 and 18, the second handling system 101 includes only one pair of link elements 51, 52, e.g. chains, each of which has one end connected to one tray elevator 30, 40, and the other end connected to the other tray elevator 40, 30.

Advantageously, the two chains 51, 52 have substantially the same extension and engage with the same driving wheel 80, preferably interposed between the tray elevators 30, 40.

Also in this case, the lifting/lowering of the first tray elevator 30 by the driving wheel 80 causes the lowering/lifting of the second tray elevator 40, acting as a counter-balance.

The driving wheel 80 can be substantially aligned with the driven wheels 71, 72, 73, 74, or, it can be situated near the ground, accessible to an operator.

According to a still further embodiment (not shown), each chain 51, 52 can be connected to a corresponding driving wheel 72, 73, the latter being operated synchronously.

It results clear from what above that the proposed apparatus for loading/unloading ceramic products and the like to/from storage roller boxes allows a reduction of the system installation, handling and maintenance costs, reducing at the same time the working areas, potentially dangerous to the operators and the carriages destined for placing and/or withdrawing the storage boxes.

This has been obtained by using a pair of tray elevators, each of which working on a corresponding box, instead of using the roller conveyor of the prior art , which operates in connection with the pair of boxes, by a combined translation movement, along a horizontal axis and a vertical axis.

It is obvious that the absence of the complex roller conveyor has allowed not only a drastic reduction of installation, maintenance and handling costs of the whole apparatus, but also a considerable reduction of the collision probability during the placing and/or withdrawing of the storage boxes.

The use of a pair of tray elevators, each of which aimed at acting on a corresponding box, allows placing and/or withdrawing the boxes in the so-called "no work" areas, that is areas without work means in close proximity to the operation means.

This allows also a high system flexibility.

Further, this allows extremely safe placing and/or withdrawing steps, reducing to the minimum the risk of collision with either the cantilevered arms, for the motorization of the box rollers, or with each moving roller conveyor.

The tray elevators can have a handling system, which can be advantageously interconnected or operated independently.

In the first case, the tray elevators are interconnected by a common handling system, which makes the translation driving action of the one correspond to a relative counter-balance action of the other, and vice versa.

This handling system can use open link elements, including chains or bands winding respectively round corresponding toothed wheels or pulleys.

The use of the counter-balance action of the first "passive" tray elevator, during the operation of the "active" tray elevator, makes it possible to reduce the number of elements of the handling system, to use actuators of reduced dimensions, which require less complicated installation and maintenance operations.

Moreover, the use of the link elements (chains or bands) of substantially similar extension, ensures a correct alignment of the tray elevators during the movement in the long time.

## Claims

1. Apparatus for loading/unloading of ceramic products to/from roller storage boxes, of the type including
a station (2) for loading/unloading the boxes and for operating at least on a pair of roller boxes (3, 4) and including at least one arm (5), moving vertically with respect to a guiding frame (6, 60, 600), having means for alternate motorization of the heads of rollers of each track of said pair of boxes (3, 4); and
at least one first roller conveyor (7), situated at ground level for interchanging ceramic products with a conveying line (8);
**characterized in that** it further comprises:
at least one pair of tray elevators (30, 40), moving only vertically for spatial connection of the tracks of the corresponding facing box (3, 4); and
means (31, 32, 41, 42), connected to each tray elevator (30, 40), for controlled interchange of ceramic products between the relevant facing box (3, 4) and the first ground roller conveyor (7).

2. Apparatus, according to claim 1, **characterized in that** it includes a first ground roller conveyor (7), interposed between the tray elevators (30, 40), to allow interchange of ceramic products with both elevators.

3. Apparatus, according to claim 1, **characterized in that** it includes a first ground roller conveyor (7), situated beside at least one of said tray elevators (30, 40), to allow direct interchange of ceramic products with the same.

4. Apparatus, according to claim 3, **characterized in that** it includes a connecting roller conveyor (9), interposed between the pair of tray elevators (30, 40).

5. Apparatus, according to claim 4, **characterized in that** said connecting roller conveyor (9) is situated at ground level.

6. Apparatus, according to one of the claims from 1 to 5, **characterized in that** said interchange means include, for each tray elevator (30, 40), a roller conveyor (31, 41) with parallel motorized rollers cooperating with a plurality of conveying belts (32, 42), interposed between said parallel rollers, and operated from a lower rest position to an upper active position, where they define a support and transport surface for ceramic products, situated above the track defined by the motorized rollers.

7. Apparatus, according to claim 6, **characterized in that** the rollers of the roller conveyors (31, 41) are connected to the tray elevators (30, 40), and the rollers of the first ground roller conveyor (7) are parallel and oriented orthogonal with respect to the rollers of the pair of boxes (3, 4), situated in the loading/unloading station (2), with the interchange of ceramic products between the boxes (3, 4) and the tray elevators (30, 40) allowed by the connected conveying belts (32, 42).

8. Apparatus, according to claim 4, or 5, and 6 or 7, **characterized in that** the rollers of the roller conveyors (31, 41), connected to the tray elevators (30, 40) and the rollers of the connection roller conveyor (9) are parallel.

9. Apparatus, according to one of the claims from 1 to 8, **characterized in that** it includes compensating means (10), which cooperate with at least first ground roller conveyor (7) and which collect and/or release ceramic products during the interchange with the conveying line (8) and the first roller conveyor (7).

10. Apparatus, according to claim 1, **characterized in that** it includes a pair of ground roller conveyors, a first ground roller conveyor (7) and a second ground roller conveyor (70), which are connected to said pair of tray elevators (30, 40), each of which for allowing tile interchange between the conveying line (8) and the corresponding tray elevator (30, 40); and means (31, 41), connected to each of the tray elevators (30, 40), for controlled interchange of ceramic products between the relevant facing box (3, 4) and the corresponding ground roller conveyor (7, 70) .

11. Apparatus, according to claim 10, **characterized in that** said interchange means include, for each tray elevator (30, 40), at least one roller conveyor (31, 41) having parallel, powered rollers.

12. Apparatus, according to claim 11, **characterized in that** the rollers of the roller conveyors (31, 41) are connected to each of the tray elevators (30, 40) and the corresponding rollers of the ground roller conveyor (7, 70) and of the facing box (3, 4) are parallel, with the interchange of the ceramic products therebetween along straight trajectory.

13. Apparatus, according to one of the claims 10 to 12, **characterized in that** it includes compensating means (10, 11), which cooperate with at least one of the ground roller conveyors (7, 70) and which can collect and/or release ceramic products during the interchange with the conveying line (8) and the corresponding ground roller conveyor (7, 70).

14. Apparatus, according to one of the claims from 1 to 13, **characterized in that** it includes a pair of boxes (3, 4), situated in the loading/unloading station (2), one beside the other.

15. Apparatus, according to one of the claims from 1 to 13, **characterized in that** it includes a pair of boxes (3, 4), situated in the loading/unloading station (2), spaced apart, so that each of them is fully accessible from the side.

16. Apparatus, according to one of the claims from 1 to 15, **characterized in that** the ceramic products are conveyed on the conveying line (8) in rows, longitudinal or transversal, or in layers.

17. Apparatus, according to one of the claims from 1 to 16, **characterized in that** the arm (5), operating in the loading/unloading station (2), is operated vertically, in a way independent from the vertical movement of the pair of tray elevators (30, 40).

18. Apparatus, according to one of the claims from 1 to 17, **characterized in that** said pair of tray elevators (30, 40) are moved vertically in an independent way.

19. Apparatus, according to one of the claims from 1 to 17, **characterized in that** said pair of tray elevators (30, 40) are interconnected by a driving system, which makes the driving action of one correspond to a relative counter-balance action of the other.

20. Apparatus, according to claim 19, **characterized in that** said driving system includes at least one pair of link elements (51, 52), which turn round corresponding wheels (71, 72, 73, 74, 80), at least one of which being a driving wheel, with each link element (51, 52) being connected at one end to a tray elevator (30, 40) and at the other end to the other tray elevator (40, 30).

21. Apparatus, according to claim 19, **characterized in that** said driving system includes at least two pairs of link elements, a first pair (51, 52) and a second pair (53, 54), which turn round corresponding wheels (71,72, 73, 74, 75, 76, 80), at least one of which being a driving wheel, with one end of the link element (51, 52, 53, 54) of each pair being connected to the corresponding tray elevator (30, 40) and with the other end thereof being connected to the driving wheel (80).

22. Apparatus, according to claim 20 or 21, **characterized in that** the link elements (51, 52, 53, 54) of one pair are similar in extension.

23. Apparatus, according to one of the claims from 20 to 22, **characterized in that** the driving wheel (80) is either substantially aligned with the driven wheels (71, 72, 73, 74, 75, 76), or situated near the ground, accessible to an operator.

24. Apparatus, according to one of the claims from 20 to 23, **characterized in that** said link elements (51, 52, 53, 54) are bands of synthetic material and/or ropes, or chains, which turn around corresponding pulleys or toothed wheels (71, 72, 72, 74, 75, 76, 80).

25. Apparatus, according to one of the claims from 1 to 24, **characterized in that** the guide frame of the loading/unloading station has a single portal (6, 60), set straddling above each box (3, 4), or a double portal (600), set straddling above both boxes (3, 4).

## Patentansprüche

1. Vorrichtung zur Be- und Entladung von keramischen Gegenständen auf/von Rollenpaletten derart, daß sie umfaßt
eine Station (2) zur Be- und Entladung der Paletten und zur Ansteuerung von wenigstens einem Paar von Rollenpaletten (3, 4) und mit wenigstens einem Arm (5), der sich vertikal in Bezug auf einen Führungsrahmen (6, 60, 600) bewegt, mit Mitteln zum wechselweisen Antrieb der Köpfe der Rollen jeder Bahn des genannten Paares von Paletten (3, 4); und
wenigstens einen ersten Rollenförderer (7), der sich im Bodenbereich befindet, für den Austausch von keramischen Erzeugnissen mit einem Förderband (8);
**dadurch gekennzeichnet, dass** sie weiterhin umfaßt;
wenigstens ein Paar von Muldenförderern (30, 40), das sich nur vertikal zur räumlichen Verbindung der Bahnen der zugeordneten Paletten (3, 4) bewegt; und
Mittel (31, 32, 41, 42), die mit jedem Muldenförderer (30, 40) für den gesteuerten Austausch von keramischen Erzeugnissen zwischen den zugeordneten Paletten (3, 4) und dem ersten Flurförderer (7) verbunden sind.

2. Vorrichtung gemäß Anspruch 1, **dadurch gekennzeichnet, dass** sie einen ersten Flurförderer (7) umfaßt, der zwischen den Muldenförderern (30, 40) angeordnet ist, um den Austausch von keramischen Erzeugnissen mit beiden Förderern zu ermöglichen.

3. Vorrichtung gemäß Anspruch 1, **dadurch gekennzeichnet, dass** sie einen ersten Flurförderer (7) umfaßt, der sich neben wenigstens einem der genannten Muldenförderer (30, 40) befindet, um den direkten Austausch von keramischen Erzeugnissen mit demselben zu ermöglichen.

4. Vorrichtung gemäß Anspruch 3, **dadurch gekennzeichnet, dass** sie wenigstens ein Verbindungs-Förderband (9) umfaßt, das zwischen den Muldenförderern (30, 40) angeordnet ist.

5. Vorrichtung gemäß Anspruch 4, **dadurch gekennzeichnet, dass** das besagte Verbindungs-Förderband (9) sich im Bodenbereich befindet.

6. Vorrichtung gemäß einem der Ansprüche 1 bis 5, **dadurch gekennzeichnet, dass** die besagten Austauschmittel für jeden Muldenförderer (30, 40) einen Rollenförderer (31, 41) mit parallelen angetriebenen Rollen umfassen, die mit einer Anzahl von Förderbändern (32, 42) zusammenwirken, die zwischen den besagten parallelen Rollen angeordnet sind und die von einer unteren Ruheposition in eine obere aktive Position bewegt werden, wo sie eine Unterstützungs- und Transportfläche für keramische Produkte bilden, die sich oberhalb der Bahn befinden, die durch die angetriebenen Rollen gebildet wird.

7. Vorrichtung gemäß Anspruch 6, **dadurch gekennzeichnet, dass** die Rollen der Rollenförderer (31, 41) mit den Muldenförderern (30, 40) verbunden sind und daß die Rollen des ersten Flurförderers (7) parallel liegen und senkrecht in Bezug auf die Rollen des Paares von Paletten (3, 4) ausgerichtet sind, das sich in der Be- und Entladestation (2) befindet, wobei der Austausch von keramischen Erzeugnissen zwischen den Paletten (3, 4) und den Muldenförderern (30, 40) durch die damit verbundenen Förderbänder (32, 42) ermöglicht wird.

8. Vorrichtung gemäß Anspruch 4 oder 5 und 6 oder 7, **dadurch gekennzeichnet, dass** die Rollen der Rollenförderer (31, 41), die mit den Muldenförderern (30, 40) verbunden sind, und die Rollen der Verbindungs-Förderer (9) parallel angeordnet sind.

9. Vorrichtung gemäß einem der Ansprüche 1 bis 8, **dadurch gekennzeichnet, dass** sie Ausgleichsmittel (10) umfaßt, die mit wenigstens dem ersten Flurförderer (7) zusammenwirken und die keramische Erzeugnisse während des Zusammenwirkens mit dem Förderband (8) und dem ersten Flurförderer (7) aufnehmen und/oder abgeben.

10. Vorrichtung gemäß Anspruch 1, **dadurch gekennzeichnet, dass** sie ein Paar von Flurförderern, einen ersten Flurförderer (7) und einen zweiten Flurförderer (70) umfaßt, die mit dem besagten Paar von Muldenförderern (30, 40) verbunden sind, von denen jeder den Austausch von Fliesen zwischen dem Förderband (8) und dem zugeordneten Muldenförderer (30,40) ermöglicht; und Mittel (31, 41), die mit jedem der Muldenförderer (30, 40) verbunden sind, um den kontrollierten Austausch von keramischen Erzeugnissen zwischen der zugeordneten Palette (3, 4) und dem zugeordneten Flurförderer (7, 70) zu ermöglichten.

11. Vorrichtung gemäß Anspruch 10, **dadurch gekennzeichnet, dass** die besagten Austauschmittel für jeden Muldenförderer (30, 40) wenigstens einen Rollenförderer (31, 41) mit parallelen angetriebenen Rollen umfassen.

12. Vorrichtung gemäß Anspruch 11, **dadurch gekennzeichnet, dass** die Rollen der Rollenförderer (31, 41) mit jedem der Muldenförderer (30, 40) verbunden sind und daß die jeweils zugeordneten Rollen des Flurförderers (7, 70) und der Palette (3, 4) parallel angeordnet sind, um den Austausch von keramischen Erzeugnissen zwischen diesen entlang einer geraden Bahn zu ermöglichen.

13. Vorrichtung gemäß einem der Ansprüche 10 bis 12, **dadurch gekennzeichnet, dass** sie Ausgleichsmittel (10,11) umfaßt, die mit wenigstens einem der Flurförderer (7, 70) zusammenwirken und die keramische Erzeugnisse während des Zusammenwirkens mit dem Förderband (8) und dem zugeordneten Flurförderer (7) aufnehmen und/oder abgeben können.

14. Vorrichtung gemäß einem der Ansprüche 1 bis 13, **dadurch gekennzeichnet, dass** sie ein Paar von Paletten (3,4) umfaßt, die sich nebeneinander in der Be- und Entladestation (2) befinden.

15. Vorrichtung gemäß einem der Ansprüche 1 bis 13, **dadurch gekennzeichnet, dass** sie ein Paar von Paletten (3, 4) umfaßt, die in der Be- und Entladestation (2) derart voneinander beabstandet angeordnet sind, dass jede von ihnen von der Seite voll zugänglich ist.

16. Vorrichtung gemäß einem der Ansprüche 1 bis 15, **dadurch gekennzeichnet, dass** die keramische Erzeugnisse auf dem Förderband (8) in Längs- der Querrichtung in Reihen oder in Schichten transportiert werden.

17. Vorrichtung gemäß einem der Ansprüche von 1 bis 16, **dadurch gekennzeichnet, dass** der Arm (5), der sich in der Be- und Entladestation (2) bewegt, vertikal auf eine Weise angesteuert wird, die unabhängig ist von der vertikalen Bewegung des Paares von Muldenförderern (30, 40).

18. Vorrichtung gemäß einem der Ansprüche von 1 bis 17, **dadurch gekennzeichnet, dass** das besagte Paar von Muldenförderern (30, 40) vertikal auf unabhängige Weise bewegt wird.

19. Vorrichtung gemäß einem der Ansprüche 1 bis 17, **dadurch gekennzeichnet, dass** das besagte Paar von Muldenförderern (30, 40) mit einem Antriebssystem verbunden ist, das einen von diesen gemäß einer entsprechenden Gegenbewegung des anderen antreibt.

20. Vorrichtung gemäß Anspruch 19, **dadurch gekennzeichnet, dass** das besagte Antriebssystem wenigstens ein Paar von Verbindungselementen (51, 52) umfaßt, die wiederum zugeordnete Räder (71,72, 73, 74, 80) beaufschlagen, von denen wenigstens eines ein Antriebsrad ist, wobei jedes der Verbindungselemente (51, 52) an einem Ende mit einem Muldenförderer (30, 40) verbunden ist und am anderen Ende mit dem anderen Muldenförderer (40, 30) verbunden ist.

21. Vorrichtung gemäß Anspruch 19, **dadurch gekennzeichnet, dass** das besagte Antriebssystem wenigstens zwei Paare von Verbindungselementen umfaßt, ein erstes Paar (51, 52) und ein zweites Paar (53, 54), die wiederum zugeordnete Räder (71, 72, 73, 74, 80) beaufschlagen, von denen wenigstens eines ein Antriebsrad ist, wobei ein Ende jedes der Verbindungselemente (51, 52, 53, 54) jedes Paares mit dem zugeordneten Muldenförderer (30, 40) und das anderen Ende desselben mit dem Antriebsrad (80) verbunden ist.

22. Vorrichtung gemäß Anspruch 20 oder 21, **dadurch gekennzeichnet, dass** die Verbindungselemente (51, 52, 53, 54) eines Paares eine vergleichbare Erstreckung aufweisen.

23. Vorrichtung gemäß einem der Ansprüche von 20 bis 22, **dadurch gekennzeichnet, dass** das Antriebsrad (80) entweder im wesentlichen mit den angetriebenen Rädern (71, 72, 73, 74, 75, 76) ausgerichtet ist oder in der Nähe des Bodens und zugänglich für eine Bedienungsperson angeordnet ist.

24. Vorrichtung gemäß einem der Ansprüche von 20 bis 23, **dadurch gekennzeichnet, dass** die besagten Verbindungselemente (51, 52, 53, 54) aus Bändern aus einem synthetischen Material und/oder aus Seilen oder Ketten bestehen, die sich um zugeordnete Rollen oder Zahnräder (71, 72, 72, 74, 75, 76, 80) drehen.

25. Vorrichtung gemäß einem der Ansprüche von 1 bis 24, **dadurch gekennzeichnet, dass** der Führungsrahmen der Be- und Entladestation über ein einziges Portal (6, 60) verfügt, das übergreifend über jeder Palette (3, 4) angeordnet ist, oder über ein Doppelportal (600), das übergreifend über beiden Paletten (3, 4) angeordnet ist.

## Revendications

1. Appareil pour charger des produits céramiques dans des boîtes de stockage à rouleaux ou les décharger de ceux-ci, du type comprenant un poste (2) pour charger/décharger les boîtes et activer au moins une paire de boîtes à rouleaux (3, 4) et comprenant au moins un bras (5), se déplaçant verticalement par rapport à un châssis de guidage (6, 60, 600), ayant des moyens pour une motorisation alternée des têtes de rouleaux de chaque piste de ladite paire de boîtes (3, 4) ; et au moins un premier transporteur à rouleaux (7), situé au niveau du sol pour échanger des produits céramiques avec une ligne de transport (8) ; **caractérisé en ce qu'**il comprend: au moins une paire d'élévateurs à plateaux (30, 40), ne se déplaçant que verticalement pour raccorder spatialement les pistes de la boîte correspondante en regard (3, 4); et des moyens (31, 32, 41, 42), raccordés à chaque élévateur à plateau (30, 40), pour un échange contrôlé de produits céramiques entre la boîte pertinente en regard (3, 4) et le premier transporteur à rouleaux au sol (7).

2. Appareil selon la revendication 1, **caractérisé en ce qu'**il comprend un premier transporteur à rouleaux au sol (7) intercalé entre les élévateurs à plateaux (30, 40), pour permettre un échange de produits céramiques avec les deux élévateurs.

3. Appareil selon la revendication 1, **caractérisé en ce qu'**il comprend un premier transporteur à rouleaux au sol (7) situé à côté d'au moins l'un desdits élévateurs à plateaux (30, 40) pour permettre un échange direct de produits céramiques avec celui-ci.

4. Appareil selon la revendication 3, **caractérisé en ce qu'**il comprend un transporteur à rouleaux de raccordement (9) intercalé entre les deux élévateurs à plateaux (30, 40).

5. Appareil selon la revendication 4, **caractérisé en ce que** ledit transporteur à rouleaux de raccordement (9) est situé au niveau du sol.

6. Appareil, selon l'une quelconque des revendications 1 à 5, **caractérisé en ce que** lesdits moyens d'échange comprennent, pour chaque élévateur à plateau (30, 40) , un transporteur à rouleaux (31, 41) avec des rouleaux motorisés parallèles coopérant avec une pluralité de courroies de transport (32, 42), intercalées entre lesdits rouleaux parallèles, et passant d'une position de repos inférieure à une position active supérieure, où ils définissent un support et une surface de transport pour les produits céramiques, située au-dessus de la piste définie par les rouleaux motorisés.

7. Appareil selon la revendication 6, **caractérisé en ce que** les rouleaux des transporteurs à rouleaux (31, 41) sont raccordés aux élévateurs à plateaux (30, 40) et les rouleaux du premier transporteur au sol (7) sont parallèles et orientés orthogonalement aux rouleaux de la paire de boîtes (3, 4) , situés dans le poste de chargement/déchargement (2), l'échange de produits céramiques entre les boîtes (3, 4) et les élévateurs à plateaux (30, 40) étant autorisé par les courroies de transport raccordées (32, 42).

8. Appareil, selon la revendication 4 ou 5, et 6 ou 7, **caractérisé en ce que** les rouleaux des transporteurs à rouleaux (31, 41), raccordés aux élévateurs à plateaux (30, 40) et les rouleaux du transporteur à rouleaux de raccordement (9) sont parallèles.

9. Appareil selon l'une quelconque des revendications 1 à 8, **caractérisé en ce qu'**il comprend des moyens de compensation (10) qui coopèrent avec au moins un premier transporteur à rouleaux au sol (7) et qui recueillent et/ou libèrent des produits céramiques pendant l'échange avec la ligne de transport (8) et le premier transporteur à rouleaux (7).

10. Appareil selon la revendication 1, **caractérisé en ce qu'**il comprend une paire de transporteurs à rouleaux au sol, un premier transporteur à rouleaux au sol (7) et un second transporteur à rouleaux au sol (70), qui sont raccordés à ladite paire d'élévateurs à plateaux (30, 40), chacun d'entre eux permettant un échange de tuiles entre la ligne de transport (8) et l'élévateur à plateau correspondant (30, 40) ; et des moyens (31, 41) raccordés à chacun des élévateurs à plateaux (30, 40), pour un échange contrôlé de produits céramiques entre la boîte pertinente en regard (3, 4) et le transporteur à rouleaux au sol correspondant (7, 70).

11. Appareil selon la revendication 10, **caractérisé en ce que** lesdits moyens d'échange comprennent, pour chaque élévateur à plateau (30, 40), au moins un transporteur à rouleaux (31, 41) ayant des rouleaux parallèles entraînés.

12. Appareil selon la revendication 11, **caractérisé en ce que** les rouleaux des transporteurs à rouleaux (31, 41) sont raccordés à chacun des élévateurs à plateaux (30, 40) et les rouleaux correspondants du transporteur à rouleaux au sol (7, 70) et de la boîte en regard (3, 4) sont parallèles, l'échange des produits céramiques entre eux se faisant le long d'une trajectoire droite.

13. Appareil selon l'une quelconque des revendications 10 à 12, **caractérisé en ce qu'**il comprend des moyens de compensation (10, 11), qui coopèrent avec au moins l'un des transporteurs à rouleaux au sol (7, 70) et peuvent recueillir et/ou retirer des produits céramiques pendant l'échange avec la ligne de transport (8) et le transporteur à rouleaux au sol correspondant (7, 70).

14. Appareil selon l'une quelconque des revendications 1 à 13, **caractérisé en ce qu'**il comprend une paire de boîtes (3, 4) situées dans le poste de chargement/déchargement (2), l'une à côté de l'autre.

15. Appareil selon l'une quelconque des revendications 1 à 13, **caractérisé en ce qu'**il comprend une paire de boîtes (3, 4) situées dans le poste de chargement/déchargement (2), séparées l'une de l'autre de sorte que chacune d'entre elles soit complètement accessible par le côté.

16. Appareil selon l'une quelconque des revendications 1 à 15, **caractérisé en ce que** les produits céramiques sont transportés sur la ligne de transport (8) en rangées, longitudinales ou transversales, ou en couches.

17. Appareil selon l'une quelconque des revendications 1 à 16, **caractérisé en ce que** le bras (5), agissant dans le poste de chargement/déchargement (2), est actionné verticalement indépendamment du mouvement vertical de ladite paire d'élévateurs à plateaux (30, 40).

18. Appareil selon l'une quelconque des revendications1 à 17, **caractérisé en ce que** les élévateurs à plateaux (30, 40) de ladite paire sont déplacés verticalement de manière indépendante.

19. Appareil selon l'une quelconque des revendications 1 à 17, **caractérisé en ce que** les élévateurs à plateaux (30, 40) de ladite paire sont raccordés entre eux par un système d'entraînement qui fait que l'action d'entraînement de l'un d'entre eux correspond à une action d'équilibrage relatif de l'autre.

20. Appareil selon la revendication 19, **caractérisé en ce que** ledit système d'entraînement comprend au moins une paire d'éléments de liaison (51, 52), tournant autour de roues correspondantes (71, 72, 73, 74, 80), au moins un d'entre eux étant une roue d'entraînement, chaque élément de liaison (51, 52) étant raccordé, à une extrémité, à un élévateur à plateau (30, 40) et, à l'autre extrémité, à l'autre élévateur à plateau (40, 30).

21. Appareil selon la revendication 19, **caractérisé en ce que** ledit système d'entraînement comprend au moins deux paires d'éléments de liaison, une première paire (51, 52) et une seconde paire (53, 54) tournant autour de roues correspondantes (71, 72, 73, 74, 75, 76, 80), dont au moins l'une est une roue d'entraînement, avec une extrémité de l'élément de liaison (51, 52, 53, 54) de chaque paire qui est raccordée à l'élévateur à plateau correspondant (30, 40), tandis que son autre extrémité est raccordée à la roue d'entraînement (80).

22. Appareil selon la revendication 20 ou 21, **caractérisé en ce que** les éléments de liaison (51, 52, 53, 54) d'une paire ont une extension similaire.

23. Appareil selon l'une quelconque des revendications 20 à 22, **caractérisé en ce que** la roue d'entraînement (80) est sensiblement alignée sur les roues d'entraînement (71, 72, 73, 74, 75, 76) ou située à proximité du sol, accessible à un opérateur.

24. Appareil selon l'une quelconque des revendications 20 à 23, **caractérisé en ce que** lesdits éléments de liaison (51, 52, 53, 54) sont des bandes de matériau synthétique et/ou des câbles ou des chaînes, qui tournent autour de poulies ou de roues dentées correspondantes (71, 72, 72, 74, 75, 76, 80).

25. Appareil selon l'une quelconque des revendications 1 to à 24, **caractérisé en ce que** le châssis de guidage du poste de chargement/déchargement a un seul portail (6, 60), monté à chevauchement sur chaque boîte (3, 4), ou un double portail (600), monté à chevauchement sur les deux boîtes (3, 4).
